# EUROPEAN PATENT SPECIFICATION

(11) **EP 1 162 378 B1**
(45) Date of publication and mention of the grant of the patent: **13.10.2004**
(21) Application number: 01660070.2
(22) Date of filing: 25.04.2001
(51) Int. Cl.: F16B 35/04

(54) **Fastening device**
Befestigungsvorrichtung
Dispositif de fixation

(30) Priority: 26.04.2000 FI 20000192 U
(43) Date of publication of application: 12.12.2001
(73) Proprietor: SK Tuote Oy, 65610 Mustasaari (FI)
(72) Inventor: Saikkonen, Eero, 65370 Vaasa (FI)
(74) Representative: Langenskiöld, Tord Karl Walter

(56) References cited:
- US-A- 4 601 625
- US-A- 4 892 429
- US-A- 6 030 162

## Description

The invention is directed to a fastening device comprising a threaded part having a pointed tip and a head part, one end of which is wider than the shaft section. The shaft of the threaded part is provided with a cavity having a non-circular cross section. The head part can be connected to the threaded part by means of a toothed coupling.

When old roofs are repaired, it is common to apply a layer of mineral wool on top of the old roofing felt layer, as heat insulation. The wool layer may be e.g. 2-5 cm thick. To provide proper pitch toward the water outlets, 0-25 cm layers of lightweight aggregate are used. On top of the lightweight aggregate, wool is applied. On top of the wool, new felt is laid, and felt and wool together are fastened to the roof using threaded, plastic fasteners. The tips of the fasteners cut through the old felt, of which there may be even 2-4 layers, and fix themselves to the old felt and the wool layer underneath it. The length of the fastener may be up to 35 cm, depending on the thickness of the wool and the lightweight aggregate layers.

When relatively long plastic fasteners are used, a problem is caused by the head of the fastener twisting in relation to the shaft during screwing in, as the fastener is screwed in by means of an ordinary screwdriver acting on its head.

US patent 4,892,429 relates to a self-cutting screw anchor designed to secure an insulation layer to the deck of a roof. A tool may be inserted into the anchor to produce torque when screwing in. In connection with this anchor, a surrounding stress plate may be used having a toothed opening acting in a ratchet fashion with the anchor as this is screwed in, thus preventing loosening of the installed assembly.

US patent 6,030,162 relates to orthopedic bone screws having a central bore to receive a tool. The screws have distinct sections of threads with varying pitch.

US patent 4,601,625 relates to a wall fastening anchor adapted to receive an inner screwing tool as well as a fastening screw.

In Finnish Utility Model Application U950234, a fastener is disclosed having a threaded shaft portion with a sharp pointed tip, and at the other end a wider head portion. In the head part, a non-circular cavity is provided. The cavity extends into the greater part of the length of the shaft portion. Thus, the fastener may be screwed in using a tool inserted into the shaft cavity.

Particularly when roof pitch is constructed, there is a need for fasteners of varying length. The present invention provides a solution to the length problem. It is characteristic for the fastening device according to the invention, that it comprises a separate threaded part not having a wider head, but having a cavity in its shaft for receiving a tool; and a separate head part, having one end which is considerably wider than the shaft part, and which head part is connected to the threaded part by means of a toothed coupling after the thread part is screwed in. Head parts of different lengths ay be used together with a single type of threaded part. Also, various lengths of threaded parts may naturally be used in fasteners according to the invention.

The invention and the particulars thereof are described more closely in the following with reference to the attached drawings, wherein
Figure 1 shows a threaded part of a fastening device according to the invention, the upper half cut open,
Figure 2 shows a top view of the same threaded part,
Figure 3 shows a section of a barrel-formed head part of a fastening device according to the invention, and
Figure 4 shows how the length of the fastening device may vary due to the connection and to head parts having different lengths.

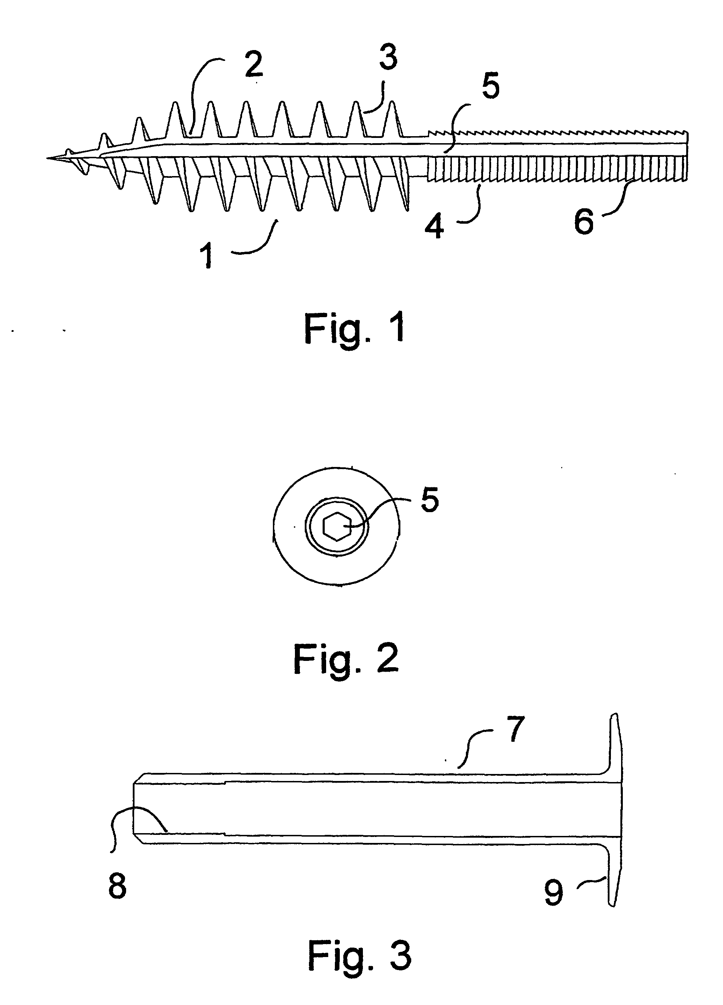

Referring to Figure 1, the fastening device has a cylindrical threaded part 1, one end of which has a conical, pointed tip portion 2. The tip section is enveloped by a thread 3. At the other end of the threaded part is a shaft 4. Within the shaft and the tip portion, a longitudinal cavity 5 is provided, preferably tapered at its inner end. The central axis of the cavity aligns with the central axis of the threaded part, and the cavity is open at the shaft end. In the embodiment shown in the Figures, the cross section of the cavity is hexagonal at least within the shaft section, as shown by Figure 2. The section can have another shape, for example a square, as long as it is non-circular. Thus, the cavity is designed to receive a tool, for example a hexagonal wrench.

The outside of the shaft has a surface providing for connection, as exemplified by the serration 6 in Figure 1.

Head part 7 shown in Figure 3 is hollow, and has an inner surface 8 complimentary to the serrated connection surface of the shaft of the threaded part. A wide portion 9 is provided at one end of the head part.

A fastening device according to the invention is screwed into position by inserting into the cavity of the threaded part a tool having a cross section corresponding to that of the cavity. The tip part of the tool also tapers according to the cavity end.

As the tool is rotated, the threaded part follows. The tool particularly supports the tip portion and transfers cutting force. Thus the threaded tip of the fastener cuts through layers of felt and wool and the fastener is fixed to the roof. During screwing in, the steel shaft of the tool provides support in order to prevent twisting of the threaded part.

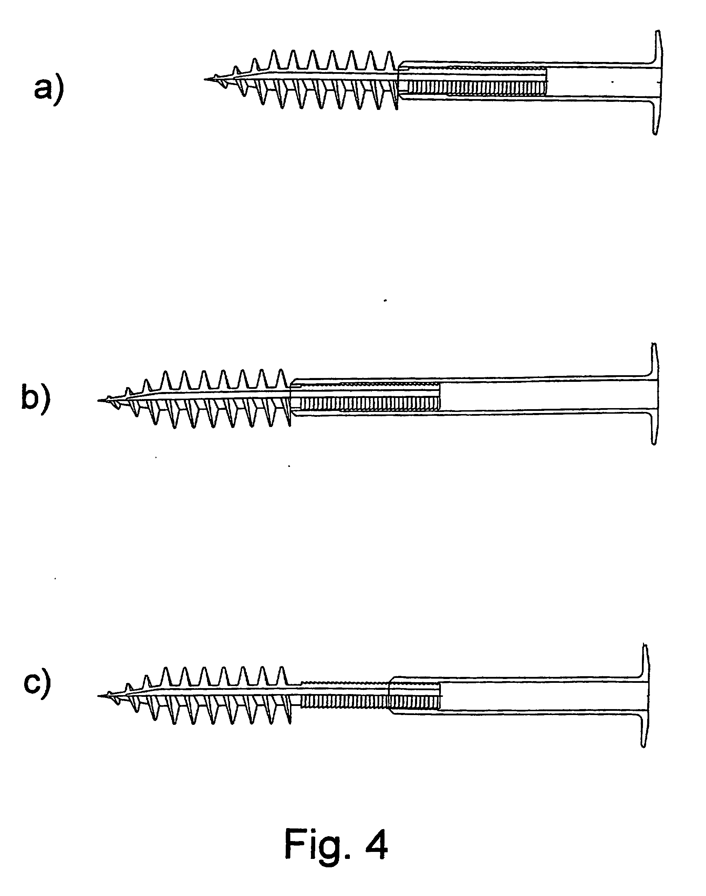

After the threaded part is screwed in, the head part is fitted to it and stepped on, whereby the fastener head is pressed tightly against the roof, Figures 4 a-b. The total length of the fastener may vary within the limits set by the toothed coupling, as shown by Figure 4 c.

## Claims

1. Fastening device having
- a threaded part (1) comprising a tip portion (2) and a shaft portion (4), the threaded part having a cavity (5) non-circular in cross section, the cavity extending throughout the greater part of the length of the threaded part; and
- a head part (7),
the head part being hollow and having one end (9) substantially wider than the threaded part, **characterised by** the shaft portion having a serrated connection surface (6) and the head part (7) being provided with an inner surface (8) complimentary to the connection surface of the shaft portion for being pressed thereon.

2. Fastening device according to claim 1, **characterised by** different lengths of head parts being provided.

## Patentansprüche

1. Befestigungsvorrichtung, mit
- einem Gewindeteil (1), der einen spitzen Abschnitt (2) und einen Schaftabschnitt (4) umfasst, wobei der Gewindeteil einen Hohlraum (5) mit nicht kreisförmigem Querschnitt aufweist, wobei sich der Hohlraum durch den größeren Teil der Länge des Gewindeteils hindurch erstreckt; und
- einem Kopfteil (7), wobei der Kopfteil hohl ist und ein Ende (9) aufweist, das wesentlich breiter als der Gewindeteil ist,
**dadurch gekennzeichnet, dass**
der Schaftabschnitt eine gezahnte Verbindungsfläche (6) aufweist, und dass der Kopfteil (7) mit einer Innenfläche (8) versehen ist, die komplementär zu der Verbindungsfläche des Schaftabschnittes zum Aufpressen auf dieselbe ist.

2. Befestigungsvorrichtung nach Anspruch 1,
**dadurch gekennzeichnet, dass**
unterschiedliche Längen von Kopfteilen vorgesehen sind.

## Revendications

1. Dispositif de fixation ayant :
- une partie filetée (1) comprenant une partie d'embout (2) et une partie d'arbre (4), la partie filetée ayant une cavité (5) non circulaire en section en coupe, la cavité s'étendant à travers toute la plus grande partie de la longueur de la partie filetée ; et
- une partie de tête (7),
la partie de tête étant creuse et ayant une extrémité (9) sensiblement plus large que la partie filetée, **caractérisée en ce que** la portion d'arbre a une surface de connexion dentelée (6) et la partie de tête (7) étant munie d'une surface interne (8) complémentaire à la surface de connexion de la partie d'arbre pour qu'on appuie sur celle-ci.

2. Dispositif de fixation selon la revendication 1, **caractérisé en ce que** différentes longueurs de parties de tête sont fournies.
